# EUROPEAN PATENT APPLICATION

(11) **EP 4 398 345 A1**
(43) Date of publication of application: **10.07.2024**
(21) Application number: 22864391.2
(22) Date of filing: 25.08.2022
(51) Int. Cl.: H01M 4/505, H01M 4/525

(54) **POSITIVE ELECTRODE ACTIVE MATERIAL FOR SECONDARY BATTERIES, AND SECONDARY BATTERY**

(30) Priority: 31.08.2021 JP 2021141956
(71) Applicant: Panasonic Intellectual Property Management Co., Ltd., Kadoma-shi, Osaka 571-0057 (JP)
(72) Inventor: ZHANG Jin, Kadoma-shi, Osaka 571-0057 (JP); ESAKI Shogo, Kadoma-shi, Osaka 571-0057 (JP); HIBINO Mitsuhiro, Kadoma-shi, Osaka 571-0057 (JP); NAKURA Kensuke, Kadoma-shi, Osaka 571-0057 (JP)
(74) Representative: Novagraaf International SA
(86) International application number: PCT/JP2022/032046
(87) International publication number: WO 2023/032807

(57) **Abstract**

A positive electrode active material for a secondary battery includes a lithium metal composite oxide having a crystal structure based on a rock-salt structure belonging to a space group Fm-3m. The lithium metal composite oxide contains a first metal element other than Li, and a second metal element other than Li and the first metal element. The first metal element is at least one selected from the group consisting of Gd, Ce, Eu, Sm, and Yb.

## Description

### [Technical Field]

The present disclosure relates to a positive electrode active material for a secondary battery, and a secondary battery.

### [Background Art]

Secondary batteries, especially lithium-ion secondary batteries, have high output and high energy density and are therefore expected as promising power sources for small consumer applications, power storage devices, and electric cars. As a positive electrode active material for a lithium-ion secondary battery, a composite oxide of lithium and a transition metal (e.g., cobalt) has been used. A higher capacity can be achieved by replacing part of the cobalt with nickel.

On the other hand, in recent years, in response to the demand for high energy density, increasing attention has been paid to Li-excess lithium metal composite oxides based on Li₁₊ₓMn₁₋ₓO₂ having a rock-salt structure.

Patent Literature 1 discloses a positive electrode active material including a lithium-transition metal composite oxide which has a crystal structure belonging to a space group Fm-3m and is represented by a composition formula Li₁₊ₓNb_{y}Me_{z}AₚO₂, where Me is a transition metal including Fe and/or Mn, 0 < x < 1, 0 < y < 0.5, 0.25 < z < 1, A is an element other than Nb and Me, and 0 < p < 0.2, except Li₁₊ₚFe_{1-q}Nb_{q}O₂, where 0.15 < p < 0.3, 0 < q < 0.3.

### [Citation List]

### [Patent Literature]

Patent Literature 1: Japanese Patent No. 6197029

### [Summary of Invention]

### [Technical Problem]

Patent Literature 1 attempts to achieve high capacity by control of composition (i.e., addition of Nb). However, the capacity improvement effect is insufficient, and further improvement is expected.

### [Solution to Problem]

In view of the above, one aspect of the present disclosure relates to a positive electrode active material for a secondary battery, including: a lithium metal composite oxide having a crystal structure based on a rock-salt structure belonging to a space group Fm-3m, wherein the lithium metal composite oxide contains a first metal element other than Li, and a second metal element other than Li and the first metal element, and the first metal element is at least one selected from the group consisting of Gd, Ce, Eu, Sm, and Yb.

Another aspect of the present disclosure relates a secondary battery, including: a positive electrode; a negative electrode; and an electrolyte, wherein the positive electrode includes the above-described positive electrode active material for a secondary battery.

### [Advantageous Effects of Invention]

According to the present disclosure, it is possible to realize a secondary battery with high capacity density.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

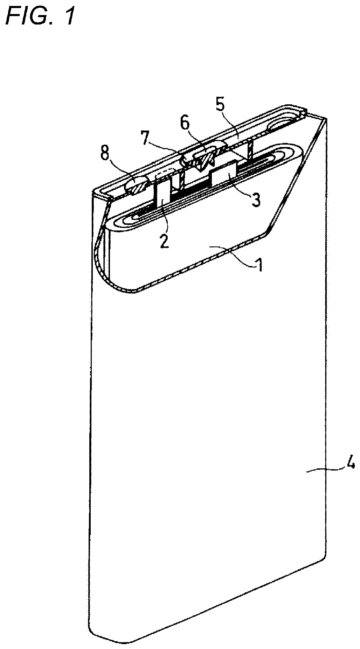

[FIG. 1] A partially cut-away schematic oblique view of a secondary battery according to one embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

In the following description, the term "comprise" or "include" is an expression including meanings of "comprise (or include)," "essentially consist of," and "consist of."

The secondary battery includes at least a nonaqueous electrolyte secondary battery, such as a lithium-ion battery and a lithium-metal secondary battery.

A positive electrode active material for a secondary battery according to an embodiment of the present disclosure includes a lithium metal composite oxide having a crystal structure based on a rock-salt structure belonging to the space group Fm-3m. The crystal structure based on a rock-salt structure belonging to the space group Fm-3m may be any crystal structure that can be assigned to the space group Fm-3m. That is, this lithium metal composite oxide has a crystal structure similar to a rock-salt structure belonging to the space group Fm-3m. The lithium metal composite oxide includes a first metal element other than Li, and a second metal element other than Li and the first metal element. The first metal element is at least one selected from the group consisting of Gd, Ce, Eu, Sm, and Yb.

The above lithium metal composite oxide can have a crystal structure based on a rock-salt structure represented by, for example, NaCl, in which oxygen atoms are arranged at the anion sites, and Li atoms and metal atoms other than Li (including the first and second metal elements) are arranged disorderly at the cation sites.

When the first metal element is contained, the capacity of the lithium metal composite oxide having the above crystal structure increases. Although still unclear, one presumable reason for this is that the first metal element has a large ion radius, and that influences the ease of lithium ion migration. Gd and Ce are preferable because in this case the average discharge potential can be increased.

In the above crystal structure, at the cation sites, the lithium metal composite oxide may have an empty space in which neither Li atoms nor metal atoms (atoms of the first and second metal elements) are arranged. Here, "having an empty space" means that, in the positive electrode active material taken out by disassembling a secondary battery immediately after production or in a discharged state, an empty space not filled with Li atoms or metal atoms is present in the lithium metal composite oxide. The proportion of the empty space may be 0.5% or more, preferably 1% or more, more preferably 2% or more of the sites where lithium atoms or metal atoms may be arranged in the crystal structure. Due to the presence of the empty space, lithium ions can migrate easily through the empty space, and the capacity can be further improved.

The lithium metal composite oxide may contain fluorine (F). In the above crystal structure, fluorine can substitute for oxygen atoms at the anion sites. This can stabilize the Li-excess state, and can provide high capacity. Furthermore, as a result of substitution by fluorine atoms, the average discharge potential rises. The Li-excess state refers to a state in which the number of Li atoms occupying the composite oxide is greater than the number of transition metal atoms.

With the above lithium metal composite oxide, due to the disorder arrangement of Li at the cation site and the various bound states of Li, the voltage distribution associated with Li release shows a wide distribution. Therefore, the tail region on the low potential side of the voltage distribution is difficult to be utilized as capacity. However, by introducing fluorine atoms, the voltage distribution associated with Li release shifts toward the high potential side, and the tail region can be utilized as capacity. This can further increase the available capacity.

The second metal element can include a transition metal element (excluding the first metal element). In particular, the second metal element preferably includes Mn. The molar ratio of Mn in the lithium-containing composite oxide may be larger than the sum of the molar ratios of the first metal element and the second metal element excluding Mn. That is, the lithium metal composite oxide may be based on a composite oxide of Li and Mn. Such a composite oxide of Li and Mn is exemplified by Li₁₊ₓMn₁₋ₓO₂.

The lithium metal composite oxide is preferably a composite oxide represented by, for example, a composition formula: LiₐMn_{b}M1_{c}M2_{d}O₂₋ₑFₑ. In the formula, M1 is at least one selected from the group consisting of Gd, Ce, Eu, Sm, and Yb. M2 is a metal element other than Li, Mn, Gd, Ce, Eu, Sm, and Yb. The above composition formula satisfies 0 < a < 1.35, 0.4 < b < 0.9, 0 < c < 0.15, 0 < d < 0.1, 0 < e < 0.75, and 1.75 < a+b+c+d < 2.

For increasing the average discharge potential, M1 is preferably at least one selected from the group consisting of Gd and Ce. In view of obtaining the effect of adding Ml, the ratio c of M1 may be 0.005 or more and 0.1 or less, may be 0.005 or more and 0.075 or less, and is desirably 0.025 or more and 0.075 or less.

M2 in the above formula includes a second metal element which is other than the first metal element and Mn. M2 may include at least one selected from the group consisting of Ti, Ni, Co, Sn, Cu, Nb, Mo, Bi, V, Cr, Y, Zr, Zn, Na, K, Ca, Mg, Pt, Au, Ag, Ru, Ta, W, La, Pr, Dy, and Er. The ratio d of M2 may be 0 or more and 0.06 or less (or 0.04 or less).

In the above composition formula, the value x represented by 2-a-b-c-d (= x) indicates the molar ratio of the empty space present at the cation sites. From the above composition formula, the molar ratio x of the empty space is 0 < x < 0.25. The molar ratio x of the empty space is preferably x > 0.02, more preferably x > 0.05, and further more preferably x > 0.1. In other words, a+b+c+d < 1.98 is preferable, a+b+c+d < 1.95 is more preferable, and a+b+c+d < 1.9 is further more preferable. The molar ratio x of the empty space is more preferably x < 0.15 (a+b+c+d > 1.85).

The empty space and the proportion of the empty space can be derived based on the crystal structure and composition of the lithium metal composite oxide. For example, in the case of a crystal structure similar to a rock-salt structure belonging to the space group Fm-3m, the proportion of the empty space can be determined by determining the composition of the lithium metal composite oxide, and calculating x = 2-a-b-c-d from the composition formula. The crystal structure of the lithium metal composite oxide is identified from an X-ray diffraction pattern measured using a powder X-ray diffractometer (e.g., desktop X-ray diffractometer MiniFlex, available from Rigaku Corporation, X-ray source: CuKa). The composition of the lithium metal composite oxide can be measured using an ICP emission spectrometer (iCAP6300 available from Thermo Fisher Scientific).

The empty space and the proportion of the empty space may be evaluated by a method using positron annihilation.

As shown in the above composition formula, part of the oxygen atoms at the anion sites may be substituted by fluorine atoms. This can stabilize the Li-excess state (a > 1), and can provide high capacity. Furthermore, as described above, the average discharge potential rises, and the available capacity further increases. When part of the oxygen atoms are substituted by fluorine atoms, the fluorine atom substitution ratio e in the composition formula of the lithium metal composite oxide may be 0.1 < e < 0.58, may be 0.1 < e < 0.5, or may be 0.2 ≤ e ≤ 0.5.

The above lithium metal composite oxide can be synthesized by, for example, mixing lithium fluoride (LiF), an oxide of a first metal element (e.g., lithium manganate (LiMn02) belonging to space group Fm-3m), and an oxide of a second metal element, in an atmosphere of an inert gas such as Ar, using a planetary ball mill. For the raw material, Li₂O and Mn₂O₃ may be used. Also, by adding lithium peroxide (Li₂O₂) in addition to the above raw materials and mixing together, a lithium metal composite oxide having an empty space can be synthesized. Instead of the planetary ball mill, a mixer capable of applying a similar stirring shear force to the powder may be used, and the powder may be heated during the mixing process. The composition, etc. of the composite oxide can be adjusted to a target range by, for example, changing the mixing ratio of LiF and LiMn02 and mixing conditions (rotation speed, processing time, processing temperature, etc.).

A secondary battery according to an embodiment of the present disclosure includes a positive electrode, a negative electrode, and an electrolyte, and the positive electrode includes the above-described positive electrode active material for a secondary battery. In the following, a detailed description will be given of the secondary battery according to an embodiment of the present disclosure.

### [Positive electrode]

The positive electrode includes, for example, a positive electrode current collector, and a positive electrode mixture layer supported on a surface of the positive electrode current collector. The positive electrode mixture layer can be formed by, for example, applying a positive electrode slurry of a positive electrode mixture dispersed in a dispersion medium onto a surface of the positive electrode current collector, followed by drying. The applied film after drying may be rolled as necessary. The positive electrode mixture layer may be formed on one or both surfaces of the positive electrode current collector.

The positive electrode mixture contains a positive electrode active material as an essential component, and can also contain a binder, a conductive agent, and the like as optional components. As the binder and conductive agent, known materials can be used.

The positive electrode active material includes the above-described lithium metal composite oxide having a crystal structure similar to a rock-salt structure belonging to the space group Fm-3m. The composite oxide is, for example, secondary particles each formed by aggregation of primary particles. The particle diameter of the primary particles is typically 0.05 µm to 1 µm. The average particle diameter of the composite oxide is, for example, 3 µm to 30 µm, preferably 5 µm to 25 µm. Here, the average particle diameter of the composite oxide means a median diameter (D50) at which the cumulative frequency is 50% in the volume-based particle size distribution, and is measured by a laser diffraction type particle size distribution analyzer.

The content of the elements constituting the composite oxide can be measured using an inductively coupled plasma-atomic emission spectroscopy instrument (ICP-AES), an electron probe microanalyzer (EPMA), an energy dispersive X-ray spectroscopy instrument (EDX), or the like.

The positive electrode active material may further contain a lithium metal composite oxide other than the above-described lithium metal composite oxide. Examples of other lithium metal composite oxides include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMeP04, and Li₂MePO₄F. Here, M is at least one selected from the group consisting of Na, Mg, Sc, Y, Mn, Fe, Co, Ni, Cu, Zn, Al, Cr, Pb, Sb, and B. Me includes at least a transition element (e.g., at least one selected from the group consisting of Mn, Fe, Co, and Ni). Here, 0 < a < 1.2, 0 < b < 0.9, and 2.0 < c < 2.3. Note that the value a indicating the molar ratio of lithium increases or decreases during charging and discharging.

The positive electrode current collector may be a non-porous electrically conductive substrate (e.g., metal foil), a porous electrically conductive substrate (e.g., mesh, net, punched sheet), and the like. The material of the positive electrode current collector may be, for example, stainless steel, aluminum, an aluminum alloy, titanium, and the like.

### [Negative electrode]

The negative electrode, for example, has a negative electrode current collector, and may include a negative electrode mixture layer supported on the negative electrode current collector. The negative electrode mixture layer can be formed by, for example, applying a negative electrode slurry of a negative electrode mixture dispersed in a dispersion medium, onto a surface of the negative electrode current collector, followed by drying. The applied film after drying may be rolled as necessary. The negative electrode mixture layer may be formed on one or both surfaces of the negative electrode current collector. The negative electrode mixture layer may be a negative electrode active material layer. A lithium metal foil or a lithium alloy foil may be attached to the negative electrode current collector.

The negative electrode mixture contains a negative electrode active material as an essential component, and can contain a binder, a conductive agent, and the like as optional components. As the binder and conductive agent, known materials can be used.

The negative electrode active material includes a material that electrochemically absorbs and releases lithium ions, lithium metal, and/or a lithium alloy. As the material that electrochemically absorbs and releases lithium ions, a carbon material, an alloy-type material, and the like can be used. Examples of the carbon material include graphite, graphitizable carbon (soft carbon), and non-graphitizable carbon (hard carbon). In particular, graphite is preferred because of its excellent stability during charging and discharging and low irreversible capacity. The alloy-type material contains at least one metal capable of forming an alloy with lithium, examples of which include silicon, tin, a silicon alloy, a tin alloy, and a silicon compound. Materials in which these are bonded with oxygen, such as silicon oxide and tin oxide, may be used.

The alloy-type material containing silicon may be, for example, a silicon composite material including a lithium-ion conductive phase and a silicon phase (e.g., silicon particles) dispersed in the lithium-ion conductive phase. As the lithium-ion conductive phase, for example, a silicon oxide phase, a silicate phase, and/or a carbon phase can be used. The principal component (e.g., 95 to 100 mass%) of the silicon oxide phase can be silicon dioxide. In particular, a composite material constituted of a silicate phase and a silicon phase dispersed in the silicate phase is preferred because of its high capacity and low irreversible capacity.

The silicate phase may contain, for example, at least one element selected from the group consisting of a Group I element and a Group II element in the long form of the periodic table. Examples of the Group I element and the Group II element in the long form of the periodic table include lithium (Li), potassium (K), sodium (Na), magnesium (Mg), and calcium (Ca), strontium (Sr), and barium (Ba). Other elements, such as aluminum (Al), boron (B), lanthanum (La), phosphorus (P), zirconium (Zr), and titanium (Ti), may be contained. In particular, a lithium silicate phase is preferred because of its small irreversible capacity and high initial charge-discharge efficiency.

The lithium silicate phase is an oxide phase containing lithium (Li), silicon (Si), and oxygen (0), and may contain other elements. The atomic ratio O/Si of 0 to Si in the lithium silicate phase is, for example, more than 2 and less than 4. The O/Si is preferably more than 2 and less than 3. The atomic ratio Li/Si of Li to Si in the lithium silicate phase is, for example, more than 0 and less than 4. The lithium silicate phase can have a composition represented by a formula: Li_{2z}SiO_{2+z}, where 0 < z < 2. Preferably, z satisfies 0 < z < 1, and more preferably z = 1/2.

Examples of the elements other than Li, Si and 0 that may be contained in the lithium silicate phase include iron (Fe), chromium (Cr), nickel (Ni), manganese (Mn), copper (Cu), molybdenum (Mo), zinc (Zn) and aluminum (Al).

The carbon phase can be constituted of, for example, shapeless carbon with low crystallinity (i.e., amorphous carbon). The amorphous carbon may be, for example, hard carbon, soft carbon, or other than these.

The shape of the negative electrode current collector can be selected from shapes similar to those of the positive electrode current collector. The material of the negative electrode current collector may be stainless steel, nickel, a nickel alloy, copper, a copper alloy, and the like.

### [Electrolyte]

The electrolyte contains a solvent and a solute dissolved in the solvent. The solute is an electrolyte salt that ionically dissociates in the electrolyte. The solute can include, for example, a lithium salt. Components of the electrolyte other than the solvent and solute are additives. The electrolyte can include various additives. The electrolyte is normally used as it is in a liquid state, but may be in a state where its fluidity is restricted by a gelling agent or the like.

The solvent is an aqueous solvent or a non-aqueous solvent. As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl acetate, ethyl acetate, propyl acetate, methyl propionate (MP), and ethyl propionate (EP). The nonaqueous solvent may be used singly or in combination of two or more kinds.

As the nonaqueous solvent, other than the above, cyclic ethers, chain ethers, nitriles such as acetonitrile, amides such as dimethylformamide, and the like are exemplified.

Examples of the cyclic ethers include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ether.

Examples of the chain ethers include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethyleneglycol dimethyl ether, diethyleneglycol diethyl ether, diethyleneglycol dibutyl ether, 1,1-dimethoxymethane, 1,1-diethoxyethane, triethyleneglycol dimethyl ether, and tetraethyleneglycol dimethyl ether.

These solvents may be a fluorinated solvent in which one or more hydrogen atoms are substituted by fluorine atom(s). As the fluorinated solvent, fluoroethylene carbonate (FEC) may be used.

Examples of the lithium salt include a lithium salt of a chlorine-containing acid (e.g., LiC104, LiAlCl₄, LiB₁₀Cl₁₀), a lithium salt of a fluorine-containing acid (e.g., LiPF₆, LiPF₂O₂, LiBF₄, LiSbF₆, LiAsF₆, LiCF₃SO₃, LiCF₃CO₂), a lithium salt of a fluorine-containing acid imide (e.g., LiN(FSO₂)₂, LiN(CF₃SO₂)₂, LiN(CF₃SO₂)(C₄F₉SO₂), LiN(C₂F₅SO₂)₂), and a lithium halide (e.g., LiCI, LiBr, Lil). These lithium salts may be used singly or in combination of two or more kinds.

The concentration of the lithium salt in the electrolyte may be 1 mol/liter or more and 2 mol/liter or less, and may be 1 mol/liter or more and 1.5 mol/liter or less. By controlling the lithium salt concentration in the above range, an electrolyte having excellent ion conductivity and appropriate viscosity can be obtained. The lithium salt concentration is not limited to the above.

The electrolyte may contain other known additives. Examples of the additives include 1,3-propanesultone, methyl benzenesulfonate, cyclohexylbenzene, biphenyl, diphenyl ether, and fluorobenzene.

### [Separator]

It is desirable that a separator is interposed between the positive electrode and the negative electrode. The separator is excellent in ion permeability and has moderate mechanical strength and electrically insulating properties. As the separator, for example, a microporous thin film, a woven fabric, a nonwoven fabric, and the like can be used. The material of the separator is preferably a polyolefin, such as polypropylene and polyethylene.

The secondary battery may include, for example, a wound electrode group formed by winding a positive electrode and a negative electrode with a separator interposed therebetween, or a stacked electrode group formed by stacking a positive electrode and a negative electrode with a separator interposed therebetween. The secondary battery may be of any type, such as a cylindrical, prismatic, coin, button, or laminate type. In the present disclosure, the type, shape, etc. of the secondary battery are not particularly limited.

FIG. 1 is a partially cut-away schematic oblique view of a prismatic secondary battery according to one embodiment of the present disclosure.

The battery includes a bottomed prismatic battery case 4, and an electrode group 1 and a nonaqueous electrolyte (not shown) housed in the battery case 4. The electrode group 1 has a long negative electrode, a long positive electrode, and a separator interposed therebetween. The negative electrode current collector of the negative electrode is electrically connected, via a negative electrode lead 3, to a negative electrode terminal 6 provided on a sealing plate 5. The negative electrode terminal 6 is electrically insulated from the sealing plate 5 by a resin gasket 7. The positive current collector of the positive electrode is electrically connected, via a positive electrode lead 2, to the back side of the sealing plate 5. That is, the positive electrode is electrically connected to the battery case 4 also serving as a positive electrode terminal. The periphery of the sealing plate 5 is fitted to the open end of the battery case 4, and the fitted portion is laser welded. The sealing plate 5 has an electrolyte injection port, which is closed with a sealing plug 8 after injection.

The present disclosure will be specifically described below with reference to Examples and Comparative Examples. It is to be noted, however, the present disclosure is not limited to the following Examples.

### <Examples 1 to 17>

### [Production of positive electrode]

Lithium fluoride (LiF), lithium peroxide (Li₂O₂), lithium manganate (LiMn02), and an oxide of the first metal element were mixed in a predetermined mass ratio. The oxide of the first metal element used here was Gd₂O₃, CeO₂, Eu₂O₃, Sm₂O₃, or Yb₂O₃. The mixed powder was put into a planetary ball mill (Premium-Line P7, available from Fritsch, rotation speed: 600 rpm, container: 45 mL, ball: φ5 mm Zr ball), and processed at room temperature in an Ar atmosphere for 35 hours (subjected to 35 cycles, each cycle consisting of 1 hour of operation followed by 10 minutes of rest), to give a lithium metal composite oxide having a predetermined composition.

The obtained lithium metal composite oxide, acetylene black, and polyvinylidene fluoride were mixed in a solid content mass ratio of 7:2:1, and N-methyl-2-pyrrolidone (NMP) was used as a dispersion medium, to prepare a positive electrode slurry. Next, the positive electrode slurry was applied onto an aluminum foil serving as a positive electrode current collector, and the applied film was dried, and compressed, and then cut into a predetermined size, to obtain a positive electrode.

In this way, lithium metal composite oxides X1 to X17 shown in Tables 1 and 2 were synthesized as positive electrode active materials, and positive electrodes including the lithium metal composite oxides X1 to X17, respectively, were obtained.

### [Preparation of electrolyte]

LiPF₆ was added as a lithium salt in a mixed solvent obtained by mixing ethylene carbonate (EC), ethyl methyl carbonate (EMC), and dimethyl carbonate (DMC) in a predetermined volume ratio, to prepare a nonaqueous electrolyte.

### [Fabrication of test cell]

Test cells were fabricated using the above positive electrodes, with a negative electrode made of lithium metal foil used as a counter electrode. Specifically, each of the above positive electrodes and the negative counter electrode were arranged so as to face each other with a separator interposed therebetween, to form an electrode body, and the electrode body was housed in a coin-shaped outer can. The electrolyte was injected into the outer can, and then, the outer can was sealed, to obtain a coin-shaped secondary battery for testing.

Secondary batteries A1 to A17 were produced using the positive electrodes including the lithium metal composite oxides X1 to X17, respectively. The secondary batteries A1 to A17 correspond to Examples 1 to 17.

### <Comparative Example 1>

In producing a positive electrode, lithium fluoride (LiF) and lithium manganate (LiMn02) were mixed in a predetermined mass ratio. The mixed powder was put into a planetary ball mill and processed at room temperature in an Ar atmosphere, in a similar manner to in Example 1, to obtain a lithium metal composite oxide Y1 having the composition shown in Table 1, as a positive electrode active material (Comparative Example 1).

Using the obtained lithium metal composite oxide Yl, a positive electrode was produced in a similar manner to in Example 1, and a secondary battery B1 for testing was obtained.

With respect to each of the lithium metal composite oxides X1 to X17 and Yl, measurement and analysis on the X-ray diffraction pattern of the composite oxide were performed using a powder X-ray diffractometer. The results confirmed that, from the number of the XRD peaks and the peak positions, the composite oxide had a crystal structure based on a rock-salt type belonging to the space group Fm-3m.

### [Evaluation]

The secondary batteries A1 to A17 and B1 were each measured for the initial discharge capacity.

### (Initial discharge capacity)

At room temperature, the secondary battery was constant-current charged at a current of 0.1C until the voltage reached 4.95V, and then, constant-voltage charged at a voltage of 4.95V until the current reached 0.01C. After resting for 20 minutes, a constant-current discharging was performed at a current of 0.1C until the voltage reached 2.5V. The discharge capacity at this time was measured. The discharge capacity per mass of the positive electrode active material (lithium metal composite oxide) was determined as an initial discharge capacity.

### (Average discharge voltage)

In measuring the initial discharge capacity of the secondary batteries A1 and B 1, the time average of the voltage was calculated from changes over time of the battery voltage during constant-current discharging, which was determined as an average discharge voltage.

The evaluation results of the initial discharge capacity and the average discharge voltage in the secondary batteries A1 and B 1 are shown in Table 1. The evaluation results of the initial discharge capacity in the secondary batteries A2 to A17 are shown in Table 2.

**[Table 1]**

| battery | positive electrode active material | composition of positive electrode active material | initial discharge capacity (mAh/g) | average discharge voltage (V) |
|---|---|---|---|---|
| A1 | X1 | Li_{1.225}Mn_{0.7}Gd_{0.025}O_{1.4}F_{0.6} | 295 | 3.57 |
| B1 | Y1 | Li_{1.15}Mn_{0.85}0_{1.7}F_{0.3} | 273 | 3.52 |

**[Table 2]**

| battery | positive electrode active material | composition of positive electrode active material | initial discharge capacity (mAh/g) |
|---|---|---|---|
| A2 | X2 | Li_{1.15}Mn_{0.725}Gd_{0.025}O_{1.4}F_{0.6} | 282 |
| A3 | X3 | Li_{1.15}Mn_{0.725}Gd_{0.025}O_{1.7}F_{0.3} | 300 |
| A4 | X4 | Li_{1.15}Mn_{0.725}Gd_{0.025}O_{1.55}F_{0.45} | 298 |
| A5 | X5 | Li_{1.15}Mn_{0.775}Gd_{0.025}O_{1.7}F_{0.3} | 283 |
| A6 | X6 | Li_{1.15}Mn_{0.725}Ce_{0.025}O_{1.45}F_{0.55} | 305 |
| A7 | X7 | Li_{1.225}Mn_{0.7}Ce_{0.025}O_{1.45}F_{0.55} | 298 |
| A8 | X8 | Li_{1.15}Mn_{0.775}Ce_{0.025}O_{1.65}F_{0.35} | 282 |
| A9 | X9 | Li_{1.15}Mn_{0.7}Ce_{0.05}O_{1.45}F_{0.55} | 286 |
| A10 | X10 | Li_{1.175}Mn_{0.7}Ce_{0.025}O_{1.4}F_{0.6} | 294 |
| A11 | X11 | Li_{1.225}Mn_{0.65}Ce_{0.025}O_{1.35}F_{0.65} | 297 |
| A12 | X12 | Li_{1.14}Mn_{0.75}Eu_{0.026}O_{1.69}F_{0.31} | 293 |
| A13 | X13 | Li_{1.20}Mn_{0.7}Eu_{0.026}O_{1.48}F_{0.52} | 290 |
| A14 | X14 | Li_{1.25}Mn_{0.65}Eu_{0.026}O_{1.32}F_{0.68} | 287 |
| A15 | X15 | Li_{1.18}Mn_{0.7}Sm_{0.027}O_{1.67}F_{0.33} | 283 |
| A16 | X16 | Li_{1.15}Mn_{0.725}Sm_{0.025}O_{1.7}F_{0.3} | 297 |
| A17 | X17 | Li_{1.15}Mn_{0.725}Yb_{0.025}O_{1.5}F_{0.5} | 280 |

Table 1 shows that, in the battery Al, by containing Gd in the lithium metal composite oxide, the initial discharge capacity was improved as compared to in the battery B1 which contained no Gd. In the battery Al, the average discharge voltage was higher than that in the battery B1.

Table 2 shows that, in the batteries A2 to A5, too, by containing Gd in the lithium metal composite oxide, the initial discharge capacity was improved.

Table 2 shows that, in the batteries A6 to A17, by containing Ce, Eu, Sm, or Yb in the lithium metal composite oxide, the initial discharge capacity was improved as compared to in the battery B1 which contained none of them.

### [Industrial Applicability]

The positive electrode active material for a secondary battery according to the present disclosure is suitably used in secondary batteries for which high capacity is required.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug

## Claims

1. A positive electrode active material for a secondary battery, comprising:
a lithium metal composite oxide having a crystal structure based on a rock-salt structure belonging to a space group Fm-3m, wherein
the lithium metal composite oxide contains a first metal element other than Li, and a second metal element other than Li and the first metal element, and
the first metal element is at least one selected from the group consisting of Gd, Ce, Eu, Sm, and Yb.

2. The positive electrode active material for a secondary battery according to claim 1, wherein the second metal element contains Mn.

3. The positive electrode active material for a secondary battery according to claim 1 or 2, wherein the lithium metal composite oxide has an empty space at cation sites in the crystal structure.

4. The positive electrode active material for a secondary battery according to any one of claims 1 to 3, wherein the lithium metal composite oxide contains fluorine.

5. The positive electrode active material for a secondary battery according to any one of claims 1 to 4, wherein
the lithium metal composite oxide is represented by a formula:
LiₐMn_{b}M1_{c}M2_{d}O₂₋ₑFₑ,
and
in the formula,
M1 is at least one selected from the group consisting of Gd, Ce, Eu, Sm, and Yb,
M2 is a metal element other than Li, Mn, Gd, Ce, Eu, Sm, and Yb, and
0 < a < 1.35, 0.4 < b < 0.9, 0 < c < 0.15, 0 < d < 0.1, 0 < e < 0.75, and 1.75 < a+b+c+d < 2 are satisfied.

6. The positive electrode active material for a secondary battery according to claim 5, wherein in the formula, M2 is at least one selected from the group consisting of Ti, Ni, Co, Sn, Nb, Mo, Bi, V, Cr, Y, Zr, Zn, Na, K, Ca, Mg, Pt, Au, Ag, Ru, Ta, W, La, Pr, Dy, and Er.

7. A secondary battery, comprising:
a positive electrode; a negative electrode; and an electrolyte, wherein
the positive electrode includes the positive electrode active material for a secondary battery of any one of claims 1 to 6.
